# EUROPÄISCHE PATENTSCHRIFT

(11) **EP 1 060 653 B1**
(45) Veröffentlichungstag und Bekanntmachung des Hinweises auf die Patenterteilung: **09.07.2003**
(21) Anmeldenummer: 00110569.1
(22) Anmeldetag: 18.05.2000
(51) Int. Cl.: A01F 15/08, A01F 15/10

(54) **Antrieb für eine Kolbensammelpresse für landwirtschaftliche Erntegüter**
Drive for a plunger press for agricultural produce
Entraînement pour une presse à piston pour produits agricoles

(30) Priorität: 12.06.1999 DE 19926826
(43) Veröffentlichungstag der Anmeldung: 20.12.2000
(73) Patentinhaber: Case Harvesting Systems GmbH, 01844 Neustadt (DE)
(72) Erfinder: Prellwitz, Hubert, 01844 Neustadt (DE); Bergmann, Thomas, 01844 Hohwald (DE)
(74) Vertreter: Müller, Lutz

(56) Entgegenhaltungen:
- DE-A- 19 718 830
- DE-U- 29 601 671
- GB-A- 2 219 967

## Beschreibung

Die Erfindung betrifft einen Antrieb für eine Kolbensammelpresse für landwirtschaftliche Erntegüter, wie beispielsweise Heu, Stroh, Welkgut, nachwachsende Rohstoffe und dergleichen, nach den Merkmalen im Oberbegriff des 1. Patentanspruches.

Ein derartiger Antrieb ist vorzugsweise für Kolbensammelpressen mit Schneidrotor vorgesehen, weil der heute häufig anzutreffende Einsatz von Schneidrotoren durch deren hohe Leistungsaufnahme die Anforderungen an ein Antriebskonzept völlig verändert hat. Das Problem solcher Antriebe besteht insbesondere darin, für die einzelnen Arbeitsorgane der Kolbensammelpresse einen sicheren Überlastschutz zu bieten. Solche Antriebe sind bereits in mehreren Ausführungsvarianten bekannt geworden.
So ist beispielsweise in der DE 296 01 671 U1 ein Antrieb für eine Kolbensammelpresse beschrieben, bei dem von einer Getriebeausgangswelle des Hauptgetriebes zwei Abtriebswellen unter Zwischenschaltung je einer Überlastkupplung abgeleitet werden. Die eine Abtriebswelle treibt einen Raffer zur Befüllung und anschließenden Entleerung des Zuführkanals an und die andere die zur Zuführeinrichtung gehörenden Arbeitsorgane Schneidrotor, Querförderschneckenstücke und Aufnahme- bzw. Mäheinrichtung. Die Überlastkupplung für den Raffer ist dabei als Keilschaltkupplung ausgebildet, welche bei einem vorbestimmbaren Drehmoment ausschaltet und erst nach dem Absinken der Drehzahl der Abtriebswelle den Raffer wieder zuschaltet. Die andere Überlastkupplung für die Zuführeinrichtung schaltet neben ihrer normalen Schutzfunktion auch dann ab, wenn die Keilschaltkupplung für den Raffer abgeschaltet hat, wozu beide Überlastkupplungen aber über geeignete Mittel in Wirkverbindung stehen müssen. Sie schaltet erst dann wieder ein, wenn die Keilschaltkupplung eingeschaltet ist und die Abtriebswelle zum Antrieb des Raffers wieder ihre Betriebsdrehzahl erreicht hat. Mögliche Ausführungsarten dieser Überlastkupplung können eine Elektromagnetkupplung bzw. eine hydraulisch oder mechanisch schaltbare Überlastkupplung sein, weil es hier nicht auf einen synchronen Antrieb mit irgendwelchen anderen Arbeitsorganen der Kolbensammelpresse ankommt. Zur Erfüllung der hier dargestellten Funktionsweise ist es noch notwendig, dem Raffer einen Drehzahlwächter zuzuordnen, der beim Absinken der Betriebsdrehzahl des Raffers die Überlastkupplung für die Arbeitsorgane der Zubringereinrichtung ausschaltet.
Diese Funktionsbeschreibung läßt erkennen, daß insbesondere durch die für das Zusammenwirken beider Überlastkupplungen notwendigen technischen Mittel die Herstellungskosten für den Antrieb insgesamt relativ hoch sind. Des weiteren erhöht sich durch die Vielzahl der dafür notwendigen Teile die Störanfälligkeit der Kolbensammelpresse, so daß deren effektive Einsatzzeit auf dem Feld sinkt. Der Hauptnachteil dieses Antriebes ist jedoch, daß im Überlastfall der Raffer und die Zuführeinrichtung stehenbleiben, so daß dem Bediener der Kolbensammelpresse nichts anderes übrig bleibt, als die Verstopfungen in mühevoller Handarbeit zu beseitigen.
Mit der DE 195 38 370 C1 ist eine andere Ausführungsvariante eines Antriebes für eine Kolbensammelpresse mit einem Rotorförderer zum Befüllen und Entleeren des Zuführkanals und einer diesem in Flußrichtung des Erntegutes gesehen vorgeordneten Zuführeinrichtung, die hier ebenfalls aus einem Schneidrotor, zwei Querförderschneckenstücken und einer Aufnahme- bzw. Mäheinrichtung besteht, bekannt geworden. Diese Kolbensammelpresse ist mit einem Hauptgetriebe ausgestattet, dessen mit einer Schwungscheibe verbundene Getriebeeingangswelle von einem Traktor mit Gelenkwelle angetrieben wird. Auf eine mit relativ hoher Drehzahl rotierende Getriebeausgangswelle ist ein als Kegelradgetriebe ausgebildetes Verteilergetriebe aufgesteckt, dessen eine Ausgangswelle mit einer Gelenkwelle verbunden ist. Das andere Ende der Gelenkwelle steht über eine Überlastkupplung mit der Eingangswelle eines auf der Welle des Rotorförderers befestigten weiteren Kegelradgetriebes in Verbindung, wodurch der Rotorförderer angetrieben wird. Letzteres Kegelradgetriebe weist außerdem noch eine zweite Kegelradausgangswelle auf, auf die einenends eine Gelenkwelle mit integrierter Überlastkupplung aufgesteckt ist und die anderenends mit einer Kegelradeingangswelle eines auf der Welle des Schneidrotors sitzenden Kegelradgetriebes verbunden ist. Die beiden Querförderschneckenstücken und die Aufnahme- bzw. Mäheinrichtung werden vom Schneidrotor reihenschaltungsmäßig angetrieben.

Obwohl dieses Antriebskonzept durch die Vorgabe bestimmter Ansprechmomente der Überlastkupplungen einen sicheren Überlastschutz für den Rotorförderer und die Zuführeinrichtung bietet und kostenintensive Wirkverbindungen zwischen beiden Überlastkupplungen nicht erforderlich sind, ist auch hier zu bemängeln, daß im Falle des Verstopfens nach dem Ansprechen der antriebsmäßig vor dem Rotorförderer angeordneten Überlastkupplung dieser sich nicht mehr selbst freiräumen kann. Durch die antriebsmäßige Reihenschaltung zwischen Rotorförderer und Zuführeinrichtung gilt natürlich das gleiche für die Zuführeinrichtung, so daß der Bediener der Kolbensammelpresse Verstopfungen im Zuführkanal und/oder in der Zuführeinrichtung manuell beseitigen muß. Ein weiterer Nachteil ist, daß der Rotorförderer immer dann einer ständigen Überlastung ausgesetzt ist, wenn die mit dem Schneidrotor zusammenwirkenden Schneidmesser aus dem Zuführkanal ausgeschwenkt wurden, wodurch der Schneidrotor dann nur eine geringe Antriebsleistung aufnimmt und die übrige sehr hohe zur Verfügung stehende Antriebsleistung allein auf den Rotorförderer aufgrund des relativ hohen Ansprechmoments der ersten Überlastkupplung einwirken kann.
Mit der DE 197 18 830 A1 ist noch eine dritte Ausführungsvariante eines Antriebes für eine Kolbensammelpresse bekannt geworden, die im Prinzip mit der Lösung nach der DE 296 01 671 U1 übereinstimmt. Sie ist jedoch gegenüber dieser dahingehend weiterentwickelt worden, indem die Antriebe für die Schwungscheibe, den Raffer und die Zuführeinrichtung mit Schaltkupplungen ausgestattet sind, die als automatisch auslösende Überlastkupplungen ausgebildet sind. Diese Schaltkupplungen werden von einem System zur Überwachung und Steuerung der Arbeitsfunktionen auch ohne Überlastsicherung nur durch eine Drehzahlkontrolle so geschaltet, daß eine Überlastung weitestgehend vermieden wird. Die Überwachung der Drehzahlen erledigen Drehzahlsensoren, deren Werte an eine Auswerteelektronik weitergeleitet werden. Bei überschrittenen Grenzdrehzahlen werden die Schaltkupplungen abgeschaltet und umgekehrt auch wieder zugeschaltet. Zusätzlich zu den Schaltsignalen können an bestimmte Arbeitsorgane Stellsignale übermittelt werden, wie zum Beispiel das Ausschwenken der Schneidmesser aus dem Zuführkanal bei der Abschaltung des Schneidrotors.
Obwohl diese Ausführungsvariante gegenüber der nach der DE 296 01 671 U1 weiter vervollkommnet wurde, sind die dafür eingesetzten Mittel relativ kostenintensiv in der Herstellung, weil neben Überlast- bzw. Schaltkupplungen noch Drehzahlwächter sowie das beschriebene Überwachungs- und Steuersystem notwendig sind. Außerdem verbleibt der Hauptnachteil dieses Antriebskonzeptes, daß im Falle des Verstopfens des Raffers und/oder des Zuführsystems infolge eines plötzlichen Überangebotes an Erntegut alles stehenbleibt, so daß der Bediener der Kolbensammelpresse die verstopfte Stelle manuell ausräumen muß.

Deshalb liegt der Erfindung die Aufgabe zugrunde, einen Antrieb für eine Kolbensammeipresse für landwirtschaftliche Erntegüter zu schaffen, der kostengünstig in der Herstellung ist und der auch bei einem sehr hohen Angebot an Erntegut sicherstellt, daß sich der zum Befüllen und Entleeren des Zuführkanals dienende Rotorförderer unter allen Umständen selbst freiräumt.
Diese Aufgabe wird gemäß der Erfindung durch die Merkmale des 1. Patentanspruches gelöst, wobei in den Unteransprüchen Merkmale aufgeführt sind, die diese Lösung in vorteilhafter Weise weiterentwickeln.
Durch die separate Antriebsverbindung für die das Erntegut zum Zuführkanal fördernde Zuführeinrichtung unter Einbindung einer Überlastkupplung ist gewährleistet, daß diese vor der Zerstörung durch Überlastung infolge von Fremdkörpern oder eines extrem hohen Erntegutangebotes bewahrt wird. Wenn dieser Fall eintritt, spricht die Überlastkupplung an und die gesamte Zuführeinrichtung bleibt stehen. Anschließend räumt der Rotorförderer den Zuführkanal frei bzw.der oder die Fremdkörper müssen aus der Zuführeinrichtung beseitigt werden.
In der Antriebsverbindung der Zuführeinrichtung befindet sich darüber hinaus an geeigneter Stelle noch ein Schaltelement, das in der Lage ist, die Antriebsverbindung zu einem Teil oder der gesamten Zuführeinrichtung zu unterbrechen. Letzteres geschieht als Reaktion auf eine am Rotorförderer eingetretene Überlastung. Zum Feststellen des Überlastfalles ist deshalb in den Schwenkmechanismus für die Kurvenbahn zur Erzeugung der verschiedenen Förderkurven des Rotorförderers eine Überlastab- und -einschaltkupplung eingebaut, die den normalerweise bestehenden Zwangsantrieb für die Kurvenbahn, bestehend aus einer mittels eines Kurbeltriebes angetriebenen Koppel, unterbricht. Das geschieht dann, wenn die auf den Rotorförderer und damit auf die Kurvenbahn ausgeübten Reaktionskräfte infolge eines zu hohen Erntegutaufkommens so groß werden, daß das Überlastmoment der Überlastab- und -einschaltkupplung überschritten wird. In dem Augenblick kommt es durch die funktionelle Wirkverbindung zwischen der Überlastab- und -einschaltkupplung und dem Schaltelement in der Antriebsverbindung der Zuführeinrichtung zur Unterbrechung der Erntegutzufuhr. Außerdem drehen die Reaktionskräfte die Kurvenbahn in eine Position und halten sie dort fest, in der der Rotorförderer nur das untere Ende des Zuführkanals befüllt. Da in dem separaten Antrieb zum Rotorförderer keine Überlastkupplung vorgesehen ist, dreht er sich in dieser Position ununterbrochen weiter, bis er die Erntegutanhäufung in den Preßkanal geschafft hat und die normalen Belastungsverhältnisse für den Rotorförderer wieder anliegen. Dann schaltet die Überlastab- und -einschaltkupplung synchron zum Kurbelantrieb für den Preßkolben den Zwangsantrieb für die Kurvenbahn und das Schaltelement in der Antriebsverbindung der Zuführeinrichtung wieder zu, so daß der normale Befüll-und Entleerungsvorgang des Zuführkanals bei erneuter Erntegutzufuhr fortgesetzt werden kann.
Da zwischen dem Zwangsantrieb der Kurvenbahn und dem Kurbelantrieb für den Preßkolben Sychronität vorhanden sein muß, hat es sich bewährt, zur Vermeidung aufwendiger Einstellarbeiten die Überlastab- und -einschaltkupplung als synchron schaltbare Kupplung auszubilden.
Es hat sich als zweckmäßig erwiesen, als Schaltelement in der Antriebsverbindung der Zuführeinrichtung eine schaltbare Blockiereinrichtung einzusetzen, die sich in der reihenschaltungsmäßig angeordneten Antriebsverbindung der Zuführeinrichtung , bestehend aus Schneidrotor, Querförderschneckenstücken und Aufnahme- bzw. Mäheinrichtung, zwischen dem Schneidrotor und den Querförderschneckenstücken befindet. Dadurch kommt es zu einem sofortigen Stillstand der Aufnahme- bzw. Mäheinrichtung und der Querförderschneckenstücken beim Ansprechen der Blockiereinrichtung, ohne daß der relativ schwere Schneidrotor angehalten werden muß. Für das erneute Ingangsetzen der Aufnahme- bzw. Mäheinrichtung und der Querförderschneckenstücken nach dem Lösen der Blockiereinrichtung ist diese Lösung vorteilhaft, weil dann der Schneidrotor nicht beschleunigt werden muß.
Es hat sich aber ebenso bewährt, als Schaltelement in der Antriebsverbindung der Zuführeinrichtung eine schaltbare Kupplung einzusetzen, die lediglich den Antrieb in Abhängigkeit des Schaltzustandes der Überlastab- und -einschaltkupplung im Schwenkmechanismus der Kurvenbahn für den Rotorförderer aboder zuschaltet. Bei deren Anordnung an der gleichen Stelle wie die vorstehend beschriebene Blockiereinrichtung verringert sich die Zeit bis zum Stillstand der Aufnahme- bzw. Mäheinrichtung und der Querförderschneckenstücken gegenüber der Lösung mit der Blockiereinrichtung nur unwesentlich.
Damit wären als Vorteile der Erfindung zu nennen, daß sie aufgrund der Einsparung einer Überlastkupplung in der Antriebsverbindung zum Rotorförderer kostengünstig in der Herstellung ist. Ein aufwendiges System zur Überwachung und Steuerung der Arbeitsfunktionen sowie Drehzahlwächter an den Antriebselementen sind durch die Einfachheit der Erfindung ebenfalls nicht notwendig. Darüber hinaus ist sichergestellt, daß sich der Rotorförderer unter allen Umständen selbst freiräumt, weil er aufgrund der erfindungsgemäßen Antriebsgestaltung niemals vom Antrieb getrennt wird und in seiner Befüllposition für den unteren Teil des Zuführkanals dennoch förderaktiv ist.

Die Erfindung soll nun anhand von einem Ausführungsbeispiel näher erläutert werden, wobei die einzelnen Figuren zeigen:
- Fig. 1:: eine Seitenansicht auf die in Fahrtrichtung gesehene rechte Seite einer Kolbensammelpresse mit verschwenkbarer Kurvenbahn im Normalbetrieb
- Fig. 2:: eine Seitenansicht nach Fig. 1 mit abgeschaltetem Antrieb für den Schwenkmechanismus der Kurvenbahn bei überlastetem Rotorförderer
- Fig. 3:: eine Vorderansicht auf die Antriebe der Kolbensammelpresse
- Fig. 4:: eine Ansicht A nach Fig. 3

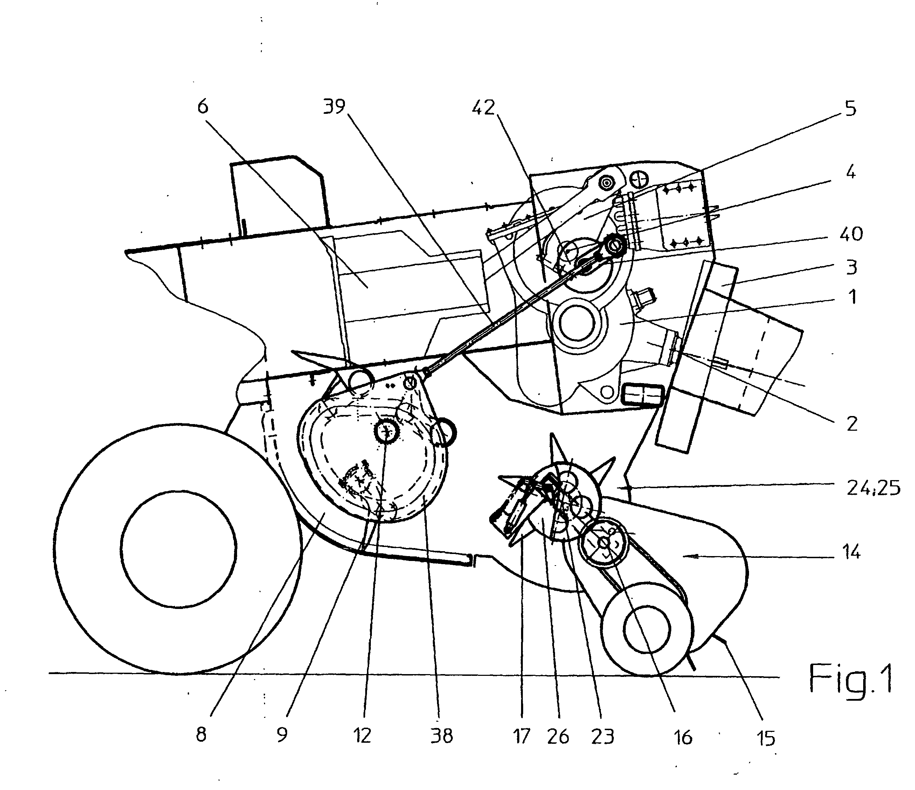

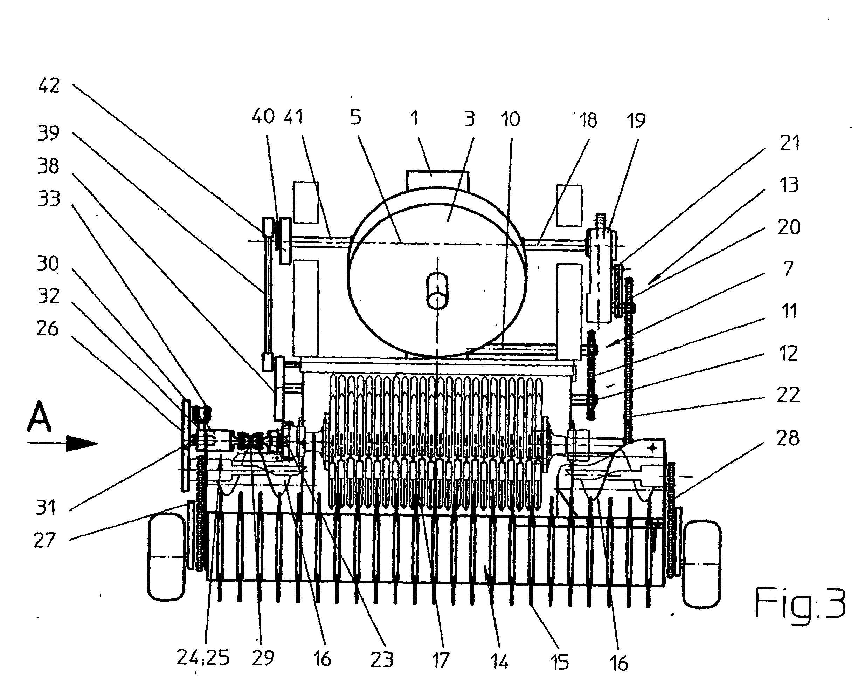

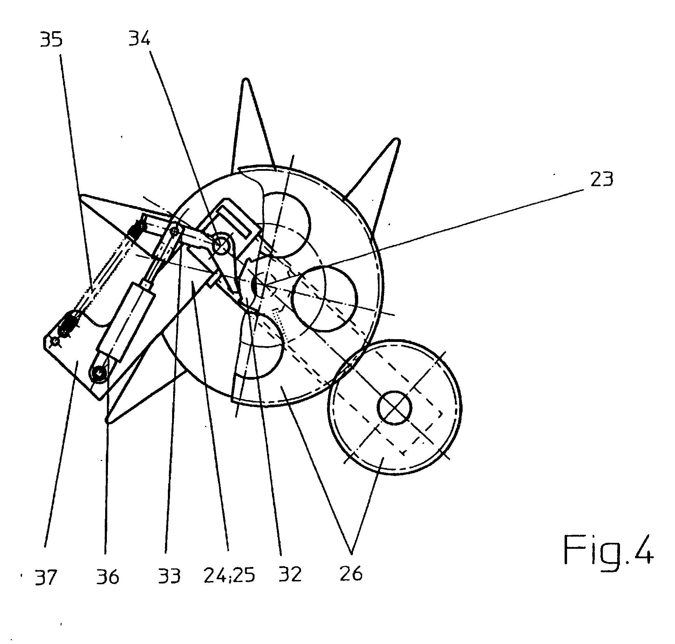

In dieser Ausführungsvariante eines Antriebes weist die Kolbensammelpresse nach den Figuren 1 bis 3 in Fahrtrichtung gesehen vorn ein Hauptgetriebe 1 auf, dessen Eingangswelle 2 gemeinsam mit einer Schwungscheibe 3 von einer geeigneten Antriebsquelle angetrieben wird, was in der Regel ein Traktor mit Gelenkwelle ist. Dieses Hauptgetriebe 1 hat eine erste Ausgangswelle 4 für den Kurbelantrieb 5 zum Antrieb des Preßkolbens 6. Eine Antriebsverbindung 7 für den als Befüll- und Entleerungsorgan für den Zuführkanal 8 arbeitenden Rotorförderer 9 kommt von der zweiten Ausgangswelle 10 des Hauptgetriebes 1, von der ein Kettentrieb 11 direkt zur Welle 12 des Rotorförderers 9 ohne Zwischenschaltung irgend eines Überlastschutzes führt.
Auf der gleichen Seite der Kolbensammelpresse befindet sich eine vom Kurbelantrieb 5 abgeleitete weitere Antriebsverbindung 13 zum Antrieb der das Erntegut zum Zuführkanal 8 befördernden Zuführeinrichtung 14 ,die aus einer Aufnahme-bzw. Mäheinrichtung 15 ,zwei Querförderschneckenstücken 16 und einem Schneidrotor 17 besteht. Diese Antriebsverbindung 13 weist eine vom Kurbelantrieb 5 abgeleitete Abtriebswelle 18 auf, auf die ein Stirnradgetriebe 19 aufgesteckt ist. Auf dessen Ausgangswelle 20 befindet sich eine Überlastkupplung 21 antriebsmäßig vor einem zum Schneidrotor 17 führenden Kettentrieb 22. Auf der dem Kettentrieb 22 gegenüberliegenden Seite des Schneidrotors 17 ist auf dessen Welle 23 ein Schaltelement 24 befestigt, das in dem Fall als eine schaltbare Blockiereinrichtung 25 ausgebildet ist. An die Blockiereinrichtung 25 schließt sich antriebsmäßig ein Stirnradtrieb 26 zum Antrieb des in Fahrtrichtung gesehenen rechten Querförderschneckenstückes 16 an. Von da aus führt ein Kettentrieb 27 zur Aufnahme- bzw.Mäheinrichtung 15 und von deren gegenüberliegender Seite ein weiterer Kettentrieb 28 zurück zum linken Querförderschneckenstück 16.
Die Blockiereinrichtung 25,die am besten in den den Figuren 3 und 4 zu sehen ist, erhält ihren Antrieb von der Welle 23 des Schneidrotors 17 über ein mit dieser verbundenes Doppelgelenk 29. Das andere Ende des Doppelgelenkes 29 ist mit der zur Blockiereinrichtung 25 gehörenden Nabe einer Ratschenkupplung 30 gekoppelt, in der die Welle 31 des großen Stirnrades des Stirnradtriebes 26 steckt. Außerhalb der Ratschenkupplung 26 trägt die Welle 31 ein mit Klinken besetztes Schaltrad 32, in das eine Sperrklinke 33 durch Verschwenken um einen Gelenkpunkt 34 einrasten kann. An der Sperrklinke 33 greifen mit dem einen Ende eine vorgespannte Zugfeder 35 und ein Hydraulikzylinder 36 an, deren andere Enden gelenkig an einem Gestellteil 37 der Kolbensammelpresse befestigt sind.

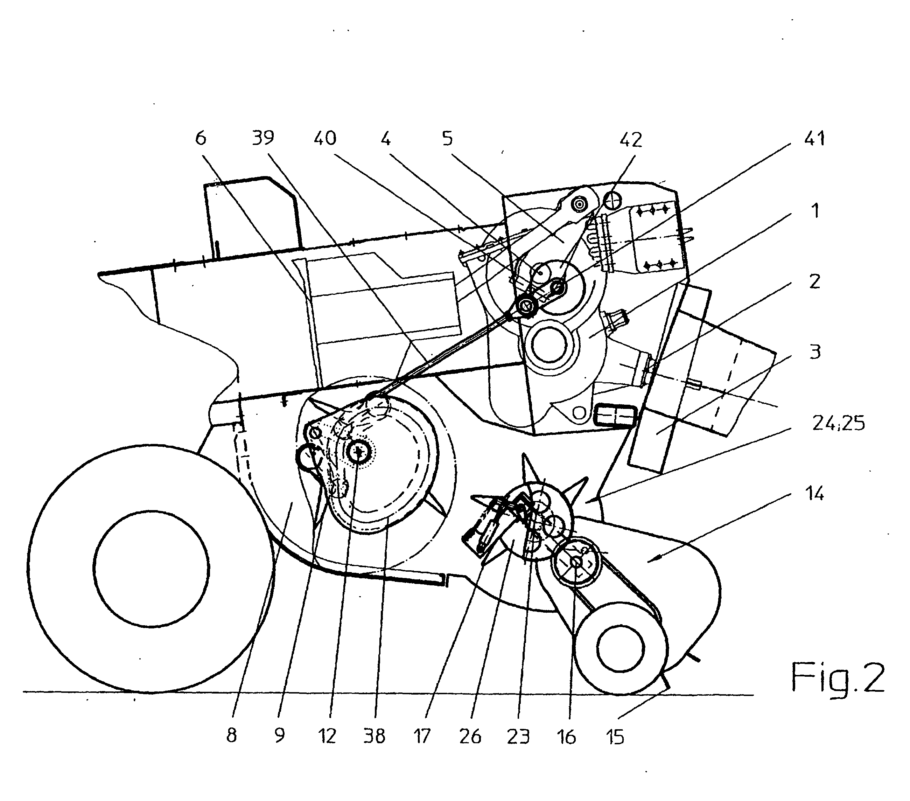

In den Figuren 1 und 2 ist der Schwenkmechanismus für den Rotorförderer 9 zu sehen, der zur Erzeugung der zum Befüllen und Entleeren des Zuführkanals 8 notwendigen veränderbaren Förderkurven eine verschwenkbare Kurvenbahn 38 aufweist, die mit dem einen Ende einer Koppel 39 gelenkig verbunden ist. Das andere Ende der Koppel 39 steht mit einem Kurbeltrieb 40 in Verbindung, der seinen Antrieb von einer vom Kurbelantrieb 5 abgeleiteten Querwelle 41 erhält. Auf dieser Querwelle 41 ist eine Überlastab- und -einschaltkupplung 42 angeordnet, die in nicht dargestellter Weise mit der Blockiereinrichtung 25 in funktioneller Wirkverbindung steht.

### Bezugszeichenaufstellung

- 1: Hauptgetriebe
- 2: Eingangswelle
- 3: Schwungscheibe
- 4: erste Ausgangswelle
- 5: Kurbelantrieb
- 6: Preßkolben
- 7: Antriebsverbindung
- 8: Zuführkanal
- 9: Rotorförderer
- 10: zweite Ausgangswelle
- 11: Kettentrieb
- 12: Welle
- 13: Antriebsverbindung
- 14: Zuführeinrichtung
- 15: Aufnahme- bzw. Mäheinrichtung
- 16: Querförderschneckenstück
- 17: Schneidrotor
- 18: Abtriebswelle
- 19: Stirnradgetriebe
- 20: Ausgangswelle
- 21: Überlastkupplung
- 22: Kettentrieb
- 23: Welle
- 24: Schaltelement
- 25: Blockiereinrichtung
- 26: Stirnradtrieb
- 27: Kettentrieb
- 28: Kettentrieb
- 29: Doppelgelenk
- 30: Ratschenkupplung
- 31: Welle
- 32: Schaltrad
- 33: Sperrklinke
- 34: Gelenkpunkt
- 35: Zugfeder
- 36: Hydraulikzylinder
- 37: Gestellteil
- 38: Kurvenbahn
- 39: Koppel
- 40: Kurbeltrieb
- 41: Querwelle
- 42: Überlastab- und einschaltkupplung

## Patentansprüche

1. Antrieb für eine Kolbensammelpresse für landwirtschaftliches Erntegut
- mit einem Hauptgetriebe (1), dessen Eingangswelle (2) gemeinsam mit einer Schwungscheibe (3) von einer geeigneten Antriebsquelle angetrieben wird,
- wo vom Hauptgetriebe (1) aus eine Antriebsverbindung (7) zu einem den Zuführkanal (8) befüllenden und anschließend entleerenden Rotorförderer (9) führt,
- wobei der Rotorförderer(9) zur Erzeugung der zum Befüllen und Entleeren veränderbaren Förderkurven eine verschwenkbare Kurvenbahn (38) aufweist, die über eine Koppel (39) mit dem Kurbelantrieb (5) zum Antrieb des Preßkolbens (6) in synchroner Antriebsverbindung steht,
und
- - wo vom Hauptgetriebe (1) aus eine weitere Antriebsverbindung (13) mit einer Überlastkupplung (21) zu den das Erntegut zum Zuführkanal (8) befördernden Zuführeinrichtung (14), bestehend aus wenigstens einer Aufnahme- bzw. Mäheinrichtung (15) und einem Schneidrotor (17), führt,
**dadurch gekennzeichnet, daß**
sich sich im Schwenkmechanismus der Kurvenbahn (38) eine Überlastabund -einschaltkupplung (42) befindet, die in funktioneller Wirkverbindung mit einem Schaltelement (24) in der Antriebsverbindung (13) der Zuführeinrichtung (14) steht.

2. Antrieb nach Anspruch 1, **dadurch gekennzeichnet, daß** die Überlastab- und -einschaltkupplung (42) als synchron schaltbare Kupplung ausgebildet ist.

3. Antrieb nach den Ansprüchen 1 und 2, **dadurch gekennzeichnet, daß** das Schaltelement (24) eine schaltbare Blockiereinrichtung (25) ist, die sich in der reihenschaltungsmäßig ausgebildeten Antriebsverbindung (13) der Zuführeinrichtung (14) nach deren Schneidrotor (17) und vor den Querförderschneckenstücken (16) sowie vor der Aufnahme- bzw.Mäheinrichtung (15) befindet.

4. Antrieb nach einem oder mehreren der Ansprüche 1 bis 3, **dadurch gekennzeichnet, daß** das Schaltelement (24) eine schaltbare Kupplung ist, die sich in der reihenschaltungsmäßig ausgebildeten Antriebsverbindung (13) der Zuführeinrichtung (14) nach deren Schneidrotor (17) und vor den Querförderscheckenstücken (16) sowie vor der Aufnahme- bzw. Mäheinrichtung (15) befindet.

## Claims

1. A drive for a piston baling press for agricultural harvested crops:
◆ with a main gearbox (1), the input shaft (2) of which is driven together with a flywheel (3) by a suitable driving source,
◆ where from the main gearbox (1) a drive connection (7) leads to a rotary conveyor (9) which fills and subsequently empties the feeder channel (8),
◆ in which the rotary conveyor (9) possesses a swivelable curved track (38) for production of the variable conveyor curves necessary for filling and emptying, which is connected via a connecting rod (39) with the cranked drive (5) for synchronously driving the pressing piston (6),
and
◆ where from the main gearbox (1) a further drive connection (13) with an overload clutch (21) leads to the feeder device (14) for conveying the harvested crop to the feeder channel (8), consisting of at least one pick-up and mowing device (15) and a cutter rotor (17),
**characterised in that**
in the swivelling mechanism of the curved track (38) there is an overload clutch (42), which is functionally connected with a switching element (24) in the drive connection (13) of the feeder device (14).

2. A drive in accordance with claim 1, **characterised in that**, the overload clutch (42) is formed as a synchronously switchable clutch.

3. A drive in accordance with claims 1 and 2, **characterised in that**, the switching element (24) is a switchable blocking device (25), which in the serially formed drive connection (13) of the feeder device (14) is situated after the cutter rotor (17) and in front of the transverse screw conveyor pieces (16) and in front of the pick-up and mowing device (15).

4. A drive in accordance with one or more of the claims 1 to 3, **characterised in that**, the switching element (24) is a switchable clutch, which in the serially formed drive connection (13) of the feeder device (14) is situated after the cutter rotor (17) and in front of the transverse screw conveyor pieces (16) and in front of the pick-up and mowing device (15).

## Revendications

1. Entraînement pour une ramasseuse-presse à piston pour un produit de récolte agricole :
◆ équipé d'une boîte de transmission principale (1), dont l'arbre d'entrée (2) est entraîné en même temps qu'un volant-moteur (3) d'une source d'entraînement appropriée,
◆ dans lequel, à partir de la boîte de transmission principale (1), un raccord de transmission (7) conduit à un transporteur rotatif (9) remplissant puis, vidant le canal d'alimentation (8),
◆ dans lequel, le transporteur rotatif (9) présentant, pour la génération des courbes de transport modifiables pour le remplissage et la vidange un parcours incurvé pivotable (38) qui est en liaison de transmission synchrone via une bielle (39), avec le mécanisme à bielle et manivelle (5) pour l'entraînement du piston de compression (6) et
◆ dans lequel, à partir de la boîte de transmission principale (1), un autre raccord de transmission (13) avec un dispositif de sécurité (21) conduit au dispositif d'alimentation (14) transportant le produit de récolte au canal d'alimentation (8), qui comprend au moins un dispositif de ramassage et de coupe (15) et un rotor de coupe (17),
**caractérisé en ce que**
un dispositif d'enclenchement et de déclenchement protégé (42) est présent dans le mécanisme de pivotement du parcours incurvé (38), le dispositif en question étant en liaison fonctionnelle active avec un élément de commande (24) dans le raccord de transmission (13) du dispositif d'alimentation (14).

2. Entraînement, selon la revendication 1, **caractérisé en ce que** le dispositif d'enclenchement et de déclenchement (42) est conçu en tant que dispositif embrayable synchrone.

3. Entraînement, selon les revendications 1 et 2, **caractérisé en ce que** l'élément de commande (24) consiste en un dispositif de blocage commutable (25), qui se trouve dans le raccord de transmission (13) du dispositif d'alimentation(14) configuré selon un montage en série, après le rotor de coupe (17) de ce dernier et avant les éléments de la vis de transport transversale (16), ainsi qu'avant le dispositif de ramassage et de coupe (15).

4. Entraînement, selon une ou plusieurs des revendications 1 à 3, **caractérisé en ce que** l'élément de commande (24) consiste en un dispositif embrayable qui se trouve dans le raccord de transmission (13) du dispositif d'alimentation(14) configuré selon un montage en série, après le rotor de coupe (17) de ce dernier et avant les éléments de la vis de transport transversale (16), ainsi qu'avant le dispositif de ramassage et de coupe (15).
